# EUROPEAN PATENT APPLICATION

(11) **EP 4 467 794 A2**
(43) Date of publication of application: **27.11.2024**
(21) Application number: 24176421.6
(22) Date of filing: 16.05.2024
(51) Int. Cl.: F02C 7/22, F02C 7/236

(54) **FUEL SYSTEMS HAVING THERMAL RECIRCULATION**

(30) Priority: 26.05.2023 US 202318202800
(71) Applicant: Hamilton Sundstrand Corporation, Charlotte, NC 28217-4578 (US)
(72) Inventor: GOY, Edward W., Crystal Lake, IL (US); SUSCA, Ryan Prescott, Windsor, CT (US); SHOOK, Ryan, Loves Park, IL (US)
(74) Representative: Dehns

(57) **Abstract**

A fuel system can include a main pump assembly (101) having a main fuel pump (103) connected to an input line and configured to pump fuel to a main fuel control (107) via a main fuel control line (109), a recirculation pump (111, 211) connected to the input line, and a fuel recirculation system (117) connected to the recirculation pump (111, 211) and upstream of the main fuel control (107). The fuel recirculation system (117) can be configured to select a mode from a plurality of modes. The plurality of modes can include a recirculation mode and a backup mode. The fuel recirculation system (117) can be configured to recirculate fuel from the recirculation pump (111, 211) to a tank through one or more coolers in the recirculation mode, and to provide fuel to the main fuel control (107) in the backup mode.

## Description

### FIELD

This disclosure relates to fuel systems having thermal recirculation.

### BACKGROUND

Traditional fuel systems for aircraft, for example, can include fuel thermal transfer to use fuel for cooling, for example. Traditionally, the cooling components are downstream of the main fuel control and driven by the main fuel pump, requiring the main fuel pump to be sized to drive all loads.

Such conventional methods and systems have generally been considered satisfactory for their intended purpose. However, there is still a need in the art for improvements. The present disclosure provides a solution for this need.

### SUMMARY

A fuel system can include a main pump assembly having a main fuel pump connected to an input line and configured to pump fuel to a main fuel control via a main fuel control line, a recirculation pump connected to the input line, and a fuel recirculation system connected to the recirculation pump and upstream of the main fuel control. The fuel recirculation system can be configured to select a mode from a plurality of modes. The plurality of modes can include a recirculation mode and a backup mode. The fuel recirculation system can be configured to recirculate fuel from the recirculation pump to a tank through one or more coolers in the recirculation mode, and to provide fuel to the main fuel control in the backup mode.

The fuel recirculation system can include a recirculation control configured to select between the recirculation mode and the backup mode. In certain embodiments, the plurality of modes can include a bypass mode. The fuel recirculation system can be configured to bypass the one or more coolers in the bypass mode. The recirculation control can be configured to select between the recirculation mode, the backup mode, and the bypass mode.

The fuel recirculation control can include one or more valves configured to select between the plurality of modes, for example. In certain embodiments, the fuel recirculation system can include the one or more coolers in fluid communication with the recirculation control downstream of the recirculation control. The one or more coolers can also be in fluid communication with a tank via a tank return line, for example.

The fuel recirculation control can be configured to connect to the one or more coolers via a cooler recirculation line, and to connect to the main fuel control via a backup line. In certain embodiments, the system can include a check valve on the backup line. The backup line can be connected to the main fuel control line. For example, in the backup mode when a pressure from the recirculation control exceeds a pressure from the main fuel pump, the check valve can be configured to open to provide backup fuel flow to the main fuel control from the recirculation pump.

In certain embodiments, the system can include the main fuel control connected to the main fuel control line and the backup line of the main pump assembly. In certain embodiments, the system can include an actuation pump system in fluid communication with the input line in parallel with the main fuel pump and the recirculation pump. In certain embodiments, the system can include an augmenter pump fuel control in fluid communication with the inlet line in parallel with the actuation pump system, the main fuel pump, and the recirculation pump.

In accordance with at least one aspect of this disclosure, a fuel system for an aircraft can include any suitable fuel system disclosed herein, e.g., as described above. In certain embodiments, the main fuel pump and the recirculation pump can each be positive displacement pumps.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an embodiment of a system in accordance with this disclosure, shown having gear pumps; and
Fig. 2 is a schematic view of an embodiment of a system in accordance with this disclosure, shown having vane pumps.

### DETAILED DESCRIPTION

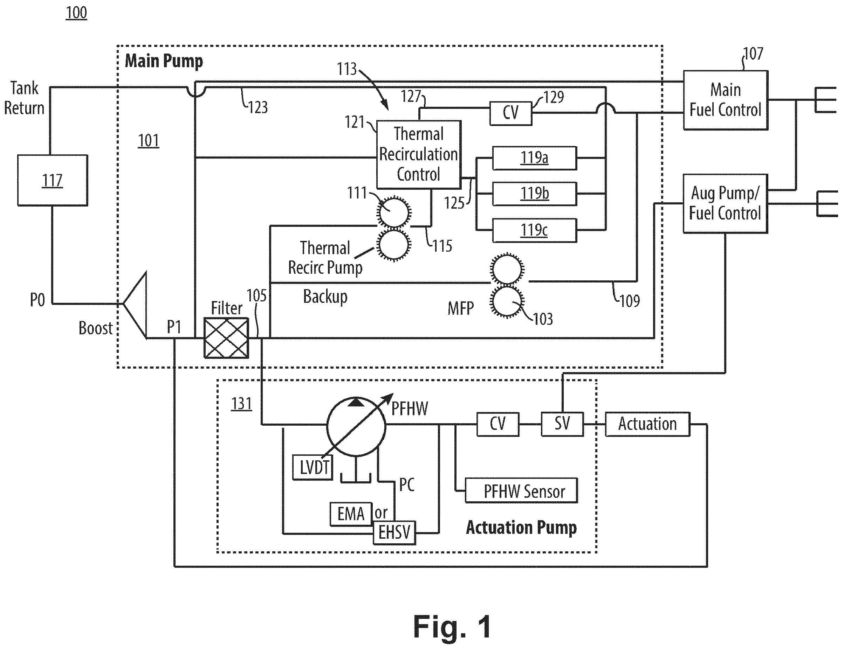

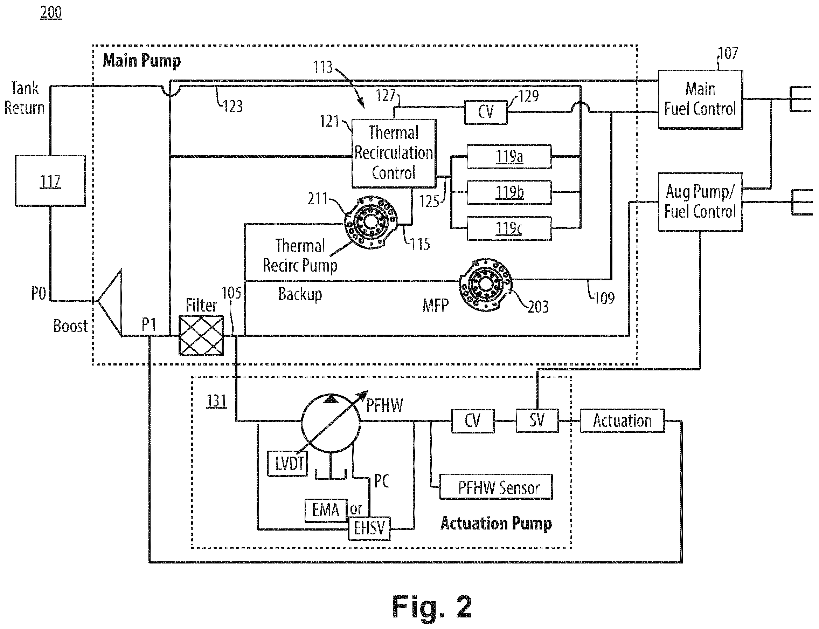

Reference will now be made to the drawings wherein like reference numerals identify similar structural features or aspects of the subject disclosure. For purposes of explanation and illustration, and not limitation, an illustrative view of an embodiment of a fuel system in accordance with the disclosure is shown in Fig. 1 and is designated generally by reference character 100. Other embodiments, views, and/or aspects of this disclosure are shown in Fig. 2.

In accordance with at least one aspect of this disclosure, a fuel system 100 can include a main pump assembly 101 having a main fuel pump 103 connected to an input line 105 (e.g., on a main fuel pump branch as shown) and configured to pump fuel to a main fuel control 107 via a main fuel control line 109. The main pump assembly 101 can include a recirculation pump 111 connected to the input line 105 (e.g., via a recirculation pump branch), and a fuel recirculation system 113 connected to the recirculation pump 111 (e.g., via a recirculation pump output line 115) and upstream of the main fuel control 107. The fuel recirculation system 113 can be configured to select a mode from a plurality of modes. The plurality of modes can include a recirculation mode and a backup mode. The fuel recirculation system 113 can be configured to recirculate fuel from the recirculation pump 111 to a tank 117 through one or more coolers 119a, 119b, 119c in the recirculation mode, and to provide fuel to the main fuel control 107 in the backup mode.

The fuel recirculation system 113 can include a recirculation control 121 configured to select between the recirculation mode and the backup mode. In certain embodiments, the plurality of modes can include a bypass mode. The fuel recirculation system 113 can be configured to bypass the one or more coolers 119a, b, c in the bypass mode. The recirculation control 121 can be configured to select between the recirculation mode, the backup mode, and the bypass mode, for example.

The fuel recirculation control 121 can include one or more valves (not shown, e.g., a three way valve, a shuttle valve, a plurality of valves, etc.) configured to select between the plurality of modes, for example. In certain embodiments, the fuel recirculation system 113 can include the one or more coolers 119a, b, c in fluid communication with the recirculation control 121 downstream of the recirculation control 121. The one or more coolers 119a, b, c can also be in fluid communication with a tank 107 via a tank return line 123, for example.

The fuel recirculation control 121 can be configured to connect to the one or more coolers 119a, b, c via a cooler recirculation line 125 (e.g., having one or more branches as shown), and to connect to the main fuel control 107 via a backup line 127. In certain embodiments, the system 100 (and/or the main pump assembly 101) can include a check valve 129 on the backup line 127. The backup line 127 can be connected to the main fuel control line 109. For example, in the backup mode when a pressure from the recirculation control 121 exceeds a pressure from the main fuel pump 103, the check valve 129 can be configured to open to provide backup fuel flow to the main fuel control 107 from the recirculation pump 111.

In certain embodiments, the system 100 can include the main fuel control 107 connected to the main fuel control line 109 and the backup line 127 of the main pump assembly 101. In certain embodiments, the system 100 can include an actuation pump system 131 in fluid communication with the input line 105 in parallel with the main fuel pump 103 and the recirculation pump 111. In certain embodiments, the system 100 can include an augmenter pump fuel control 133 in fluid communication with the inlet line 105 in parallel with the actuation pump system 131, the main fuel pump 103, and the recirculation pump 111. Embodiments can include any other suitable components (e.g., a boost pump on the inlet line 105 connected to the fuel tank).

In accordance with at least one aspect of this disclosure, a fuel system for an aircraft can include any suitable fuel system disclosed herein, e.g., system 100 as described above. In certain embodiments, e.g., as shown in Figs. 1 and 2, the main fuel pump 103, 203 and the recirculation pump 111, 211 can each be positive displacement pumps. Fig. 1 shows the system 100 having gear pumps for the main fuel pump 103 and recirculation pump 111. Fig. shows the system 200 having vane pumps for the main fuel pump 103 and recirculation pump 111.

Embodiments can provide thermal cooling of the fuel upstream of the main fuel control. Embodiments can also provide backup pumping if the main fuel pump fails, for example, using the recirculation pump. Traditionally, the main fuel control operates at thousands of PSI, and cooling of fuel occurs downstream of the main fuel control. In such traditional systems, the main fuel pump has to raise pressure to account for the cooling. Embodiments have thermal exchange upstream of main fuel control and can use unused pressure from the recirculation pump. Embodiments can reduce both pressure and flow in main fuel line, for example.

Embodiments can include various types of coolers, for example, and/or can be in series, parallel, or each could have its own control valve (e.g., in the recirculation control or through other valves). Embodiments can include a recirculation control that can selectively direct flow through coolers, or back to a filter (e.g., as shown), or through a check valve to the main fuel control in a backup mode.

In certain embodiments, the recirculation pump can be on same shaft as main fuel pump and may only be required to pump out hundreds of PSI for cooling, for example, in a recirculation mode. In embodiments, the recirculation pump can now take some of the pressure and flow load from the main fuel pump to provide cooling, for example. This can improve the efficiency of each pump. Embodiments can reduce power usage and possibly provide weight savings due to thermal efficiency. Reducing fuel system weight and pump system heat rejection can ultimately allow an aircraft to carry more fuel and increase aircraft heat rejection into the fuel.

Certain embodiments can include a variable displacement pump with direct pump displacement control via an EHSV or EMA and a pressure sensor. A pump position can be set to maintain a pressure and flow schedule to support flow demands for an actuation system to minimize actuation pumping horsepower. Actuation pump flows can be pulled off the main flow path after the filter. Thermal recirculation and cooling can be handled by a second pumping element within the main fuel pump assembly, for example. In certain embodiments, the second element can be either dedicated recirculation flow to downstream coolers or it can be a backup pumping element to the main fuel pump pumping element. The secondary pumping element can provide total cooling and tank return flow, for example.

Embodiments, can move all coolers into a low pressure zone to reduce weight. Embodiments can reduce pump rise required from boost stage to reduce horsepower extraction. Embodiments can provide independent control of thermal recirculation flows. Embodiments can provides a backup pumping stage to the main fuel pump for failure immunity.

Embodiments (e.g., including the thermal recirculation control) can include any suitable computer hardware and/or software module(s) to perform any suitable function (e.g., as disclosed herein). As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of"

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the spirit and scope of the subject disclosure.

## Claims

1. A fuel system, comprising:
a main pump assembly (101) having:
a main fuel pump (103) connected to an input line and configured to pump fuel to a main fuel control (107) via a main fuel control line (109);
a recirculation pump (111, 211) connected to the input line; and
a fuel recirculation system (117) connected to the recirculation pump (111, 211) and upstream of the main fuel control (107), the fuel recirculation system (117) configured to select a mode from a plurality of modes, wherein the plurality of modes include a recirculation mode and a backup mode, wherein the fuel recirculation system (117) is configured to:
recirculate fuel from the recirculation pump (111, 211) to a tank through one or more coolers in the recirculation mode; and
provide fuel to the main fuel control (107) in the backup mode.

2. The system of claim 1, wherein the fuel recirculation system (117) includes a recirculation control configured to select between the recirculation mode and the backup mode.

3. The system of claim 2, wherein the plurality of modes includes a bypass mode, wherein the fuel recirculation system (117) is configured to bypass the one or more coolers in the bypass mode, wherein the recirculation control is configured to select between the recirculation mode, the backup mode, and the bypass mode.

4. The system of claim 2, wherein the fuel recirculation control includes one or more valves configured to select between the plurality of modes, or wherein the fuel recirculation system (117) includes the one or more coolers in fluid communication with the recirculation control downstream of the recirculation control, and in fluid communication with a tank via a tank return line.

5. The system of claim 2, wherein the fuel recirculation control is configured to connect to the one or more coolers via a cooler recirculation line, and to connect to the main fuel control (107) via a backup line.

6. The system of claim 5, further comprising a check valve on the backup line, wherein the backup line is connected to the main fuel control line (109), wherein in the backup mode when a pressure from the recirculation control exceeds a pressure from the main fuel pump (103), the check valve is configured to open to provide backup fuel flow to the main fuel control (107) from the recirculation pump (111, 211), and optionally further comprising the main fuel control (107) connected to the main fuel control line (109) and the backup line of the main pump assembly (101).

7. The system of any preceding claim, further comprising an actuation pump system in fluid communication with the input line in parallel with the main fuel pump (103) and the recirculation pump (111, 211), and optionally further comprising an augmenter pump fuel control in fluid communication with the inlet line in parallel with the actuation pump system, the main fuel pump (103), and the recirculation pump (111, 211).

8. A fuel system for an aircraft, comprising:
a main pump assembly (101) having:
a main fuel pump (103) connected to an input line and configured to pump fuel to a main fuel control (107) via a main fuel control line (109);
a recirculation pump (111, 211) connected to the input line; and
a fuel recirculation system (117) connected to the recirculation pump (111, 211) and upstream of the main fuel control (107), the fuel recirculation system (117) configured to select a mode from a plurality of modes, wherein the plurality of modes include a recirculation mode and a backup mode, wherein the fuel recirculation system (117) is configured to:
recirculate fuel from the recirculation pump (111, 211) to a tank through one or more coolers in the recirculation mode; and
provide fuel to the main fuel control (107) in the backup mode, wherein the main fuel pump (103) and the recirculation pump (111, 211) are positive displacement pumps.

9. The system of claim 8, wherein the fuel recirculation system (117) includes a recirculation control configured to select between the recirculation mode and the backup mode.

10. The system of claim 9, wherein the plurality of modes includes a bypass mode, wherein the fuel recirculation system (117) is configured to bypass the one or more coolers in the bypass mode, wherein the recirculation control is configured to select between the recirculation mode, the backup mode, and the bypass mode.

11. The system of claim 9, wherein the fuel recirculation control includes one or more valves configured to select between the plurality of modes.

12. The system of claim 9, wherein the fuel recirculation system (117) includes the one or more coolers in fluid communication with the recirculation control downstream of the recirculation control, and in fluid communication with a tank via a tank return line.

13. The system of claim 9, wherein the fuel recirculation control is configured to connect to the one or more coolers via a cooler recirculation line, and to connect to the main fuel control (107) via a backup line.

14. The system of claim 13, further comprising a check valve on the backup line, wherein the backup line is connected to the main fuel control line (109), wherein in the backup mode when a pressure from the recirculation control exceeds a pressure from the main fuel pump (103), the check valve is configured to open to provide backup fuel flow to the main fuel control (107) from the recirculation pump (111, 211), and optionally further comprising the main fuel control (107) connected to the main fuel control line (109) and the backup line of the main pump assembly (101).

15. The system of claim 8, further comprising an actuation pump system in fluid communication with the input line in parallel with the main fuel pump (103) and the recirculation pump (111, 211), and optionally further comprising an augmenter pump fuel control in fluid communication with the inlet line in parallel with the actuation pump system, the main fuel pump (103), and the recirculation pump (111, 211).
